# EUROPÄISCHE PATENTSCHRIFT

(11) **EP 0 582 310 B1**
(45) Veröffentlichungstag und Bekanntmachung des Hinweises auf die Patenterteilung: **23.07.1997**
(21) Anmeldenummer: 93112649.4
(22) Anmeldetag: 06.08.1993
(51) Int. Cl.: G01G 11/00, B65G 19/14

(54) **Rohrkettenförderer**
Tubular chain conveyor
Transporteur tubulaire à chaîne

(30) Priorität: 07.08.1992 DE 4226188
(43) Veröffentlichungstag der Anmeldung: 09.02.1994
(73) Patentinhaber: Pfister GmbH, 86165 Augsburg (DE)
(72) Erfinder: Häfner, Hans Wilhelm, D-86551 Aichach-Walchshofen (DE)
(74) Vertreter: Fiener, Josef

(56) Entgegenhaltungen:
- DD-A- 245 719
- DE-A- 2 519 795
- DE-A- 2 913 491
- DE-A- 3 000 575

## Beschreibung

Die Erfindung betrifft einen Rohrkettenförderer mit den oberbegrifflichen Merkmalen des Patentanspruches 1.

Derartige Rohrkettenförderer werden insbesondere in der Landwirtschaft zur Förderung von Schüttgut, wie Kunstdünger oder Getreide verwendet. In den vergangenen Jahren wurden jedoch Rohrkettenförderer auch zunehmend in der Industrie zum Dosieren von Schüttgütern eingesetzt, da sie einen druckdichten Aufbau sowie eine sehr variable Linienführung ermöglichen. Die Rohre des schleifenartig angeordneten Rohrkettenförderers können hierbei übereinander stehen oder flach nebeneinander liegen. Die Rohrbögen können in der Linienführung in beliebigen Richtungen montiert werden. Zudem ist der Rohrkettenförderer preiswert in der Herstellung, relativ wartungsfreudig und problemlos zu montieren, sowie aufgrund des geschlossenen Aufbaus staubdicht und geräuscharm.

Bei dem üblichen Aufbau des Rohrkettenförderers (beispielsweise gemäß der DE-A-30 00 575) ist jedoch die Dosiergenauigkeit relativ gering, da die Füllung der einzelnen, zwischen den Mitnehmerscheiben gebildeten Kammern ungleichmäßig sein kann und zudem bei der Entleerung Fördergut an der die Mitnehmerscheiben verbindenden Förderkette anhaften kann und somit das aufzunehmende Dosiervolumen reduziert. Hierdurch können sich beträchtliche Abweichungen hinsichtlich der theoretischen Dosiergenauigkeit ergeben.

Demzufolge liegt der Erfindung die Aufgabe zugrunde, die Dosiergenauigkeit von Rohrkettenförderern zu verbessern.

Diese Aufgabe wird gelöst durch die Merkmale des Patentanspruches 1.

Durch die Abstützung wenigstens eines Teilbereiches der Rohrschleife auf mindestens einer Gewichts- bzw. Kraftmeßvorrichtung ergibt sich eine direkte gravimetrische Kontrolle der vom Rohrkettenförderer transportierten Gutmenge, ohne daß nachgeschaltete Waagen erforderlich wären. Hierdurch lassen sich Unregelmäßigkeiten, wie sie durch unterschiedliche Füllung bei der volumetrischen Dosierung unvermeidlich sind, sicher ausschließen und damit anhaftendes Material an Förderketten und dgl. erkennen, sowie dementsprechend in Art einer Dosierwaage mit regelbarem Antrieb die Soll-Dosiermenge exakt einhalten. Eine besonders einfache Bauweise ergibt sich durch die bewegliche Lagerung eines Teiles der Rohrschleife, die über wenigstens zwei flexible Zwischenelemente beweglich gelagert ist. Durch einfaches Auftrennen der Rohrschleife und Zwischenschaltung der flexiblen Zwischenelemente, insbesondere von begrenzt beweglichen Kompensatoren oder Gummibälgen und Abstützung auf die Meßvorrichtung läßt sich somit eine einfache Nachrüstung bestehender Rohrkettenförderer erreichen.

Von besonderem Vorteil ist die Ausführung mit zwei begrenzt beweglichen Rohrschleifenteilen, wobei ein Rohrteil vor der Auslaßöffnung und eines nach der Auslaßöffnung angeordnet ist, so daß durch Differenzbildung die tatsächliche Austragsmenge an der Auslaßöffnung festgestellt und damit eine Taramessung vorgenommen werden kann. Von besonders einfacher Bauart ist hierbei die gegenüberliegende Anordnung zweier Rohrstücke, die über ein Gestänge miteinander verbunden sind und in Art eines Wägebalkens nur auf eine einzige Kraftmeßvorrichtung wirken, wobei ebenfalls eine Taramessung in einfachster Weise möglich ist.

Weitere vorteilhafte Ausgestaltungen ergeben sich aus der nachfolgenden Beschreibung von mehreren, in der Zeichnung dargestellten Ausführungsbeispielen. Hierbei zeigen:
- Fig. 1: einen Rohrkettenförderer in Seitenansicht;
- Fig. 2: einen Rohrkettenförderer gemäß Fig. 1 in Draufsicht;
- Fig. 3: eine weitere Ausführungsform des Rohrkettenförderers in Draufsicht;
- Fig. 4: eine weitere Ausführungsform des Rohrkettenförderers in Seitenansicht;
- Fig. 5: eine abgewandelte Ausführung des Rohrkettenförderers gemäß Fig. 4;
- Fig. 6: eine Draufsicht auf einen Rohrkettenförderer zur Tara-Gewichtsmessung;
- Fig. 7: eine Seitenansicht auf eine weitere Ausführungsform des Rohrkettenförderers;
- Fig. 8: eine Draufsicht auf den Rohrkettenförderer gemäß Fig. 7;
- Fig. 9: ein weiteres Ausführungsbeispiel des Rohrkettenförderers; und
- Fig. 10: eine Draufsicht auf den Rohrkettenförderer gemäß Fig. 9.

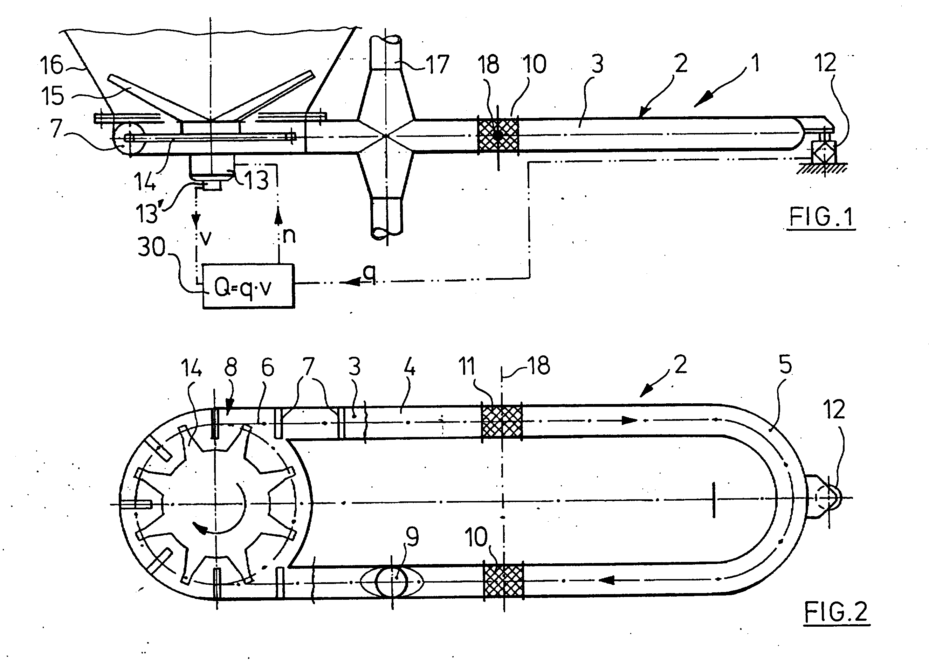

In Fig. 1 und 2 ist in Seitenansicht bzw. dazugehöriger Draufsicht ein Rohrkettenförderer 1 dargestellt, der im wesentlichen eine geschlossene Rohrschleife 2 aufweist, die aus einem Rohr mit geraden Rohrstücken 4 und zwei endseitigen Rohrbögen 5 gebildet ist. In der Rohrschleife 2 bzw. dessen Rohr 3 läuft eine Förderkette 6 um, die in gleichmäßigen Abständen Mitnehmerscheiben 7 aufweist, die in das Rohr 3 eingepaßt sind. Es sei darauf hingewiesen, daß anstatt einer Förderkette 6 auch ein Förderseil oder ein Förderriemen verwendet werden kann. Durch die dichte Einpassung der Scheiben 7ist auch die Förderung und Dosierung von Schlämmen oder Flüssigkeiten möglich. Zudem wird hierdurch eine hohe Druckstoßfestigkeit erreicht. Bei pneumatischem Austrag ist weiterhin der Betrieb mit hohen Druckdifferenzen möglich. Durch die Mitnehmerscheiben 7 wird das zu fördernde Gut, das von einer Befüllöffnung 8 aus in das Rohr 3 eintritt, entlang der Rohrschleife 2 im Uhrzeigersinn zu einer Auslaßöffnung 9 transportiert, wie dies hier mit Pfeilen angedeutet ist. Zwischen der Befüllöffnung 8 und der Auslaßöffnung 9 ist hierbei der rechte Rohrbogen 5 als Teil der Rohrschleife 2 mittels flexibler Zwischenelemente 10, 11, die insbesondere als Kompensatoren oder Gummibälge ausgebildet sind, beweglich bzw. geringfügig nachgiebig gelagert und hierbei auf eine am rechten Ende der Rohrschleife geordneten Kraftmeßvorrichtung 12, insbesondere eine Wägezelle abgestützt. Am linken Ende der Rohrschleife 2 ist ein Antrieb 13 in Form eines Kettenrades 14 vorgesehen, dessen grobzackige Zähne jeweils zwischen die Mitnehmerscheiben 7 in die Förderkette 6 eingreifen. Zudem ist über dem Kettenrad 14 ein Rührflügel 15 auf dem gleichen Antrieb 13, z. B. einem Elektromotor montiert, so daß Schüttgut aus einem Zuführtrichter 16 in die Befüllöffnung 8 gelangt. Nach der Förderung entlang der Rohrschleife 2, die beliebig lang und auch in mehreren Schleifen geführt sein kann, gelangt das Fördergut an die Auslaßöffnung 9, wo es unter Wirkung der Schwerkraft herausfallen kann oder, wie hier angedeutet, mit einer Ausblasleitung 17 ausgeblasen werden kann. Es sei darauf hingewiesen, daß die Ausblasleitung 17 im stationären Teil der Rohrschleife 2 angeordnet ist, so daß auf die Kraftmeßvorrichtung 12 keine Störmomente ausgeübt werden.

Von Bedeutung ist hierbei die bewegliche Lagerung eines Teiles der Rohrschleife 2, nämlich hier des rechten Rohrbogens 5 über die flexiblen Zwischenelemente 10 und 11. Bei der Förderung des Schüttgutes kann der hier rechte Rohrbogen 5 gegenüber dem übrigen Teil der stationär angeordneten Rohrschleife 2 geringfügig abknicken und dabei die Kraftmeßvorrichtung 12 beaufschlagen. Als Kraftmeßvorrichtung 12 können beliebige Kraftmeßvorrichtungen wie Scherkraftgeber oder Wägezellen auf induktiver, kapazitiver oder piezoelektrischer Basis Verwendung finden. Bevorzugt wird hierbei eine praktisch weglos messende Kraftmeßvorrichtung 12, insbesondere eine elastostatische Wägezelle verwendet, da sich hierdurch der Knickwinkel des rechten Rohrbogens 5 gegenüber dem übrigen Teil der Rohrschleife 2 auf wenige Winkelminuten begrenzen läßt, so daß die Umlaufbewegung der Förderkette 6 praktisch nicht behindert wird.

Durch die flexiblen Zwischenelemente 10 und 11, die sich bezüglich der Mittelachse symmetrisch gegenüberliegen, wird somit eine Schwenkachse 18 ausgebildet, um die der in Fig. 2 rechte Rohrbogen 5 zusammen mit den geradlinigen Schenkeln sich geringfügig verschwenken kann. Es sei darauf hingewiesen, daß die flexiblen Zwischenelemente 10, 11 auch durch dünne Wandstärken des Rohres der Rohrschleife selbst gebildet sein können.

Die die Gewichtskraft des Fördergutes erfassende Kraftmeßvorrichtung 12 leitet die Meßwerte an einen Rechner 30 weiter, der hieraus zusammen mit Geschwindigkeitswerten, wie z. B. von einem Tachogenerator 13' auf dem Antrieb 13 gewonnen werden, durch Produktbildung die momentane Durchflußmenge berechnet. Dieser Istwert wird mit einem vorgewählten Sollwert verglichen und bei Abweichungen auf an sich bekannte Weise der regelbare Antrieb nachgeregelt.

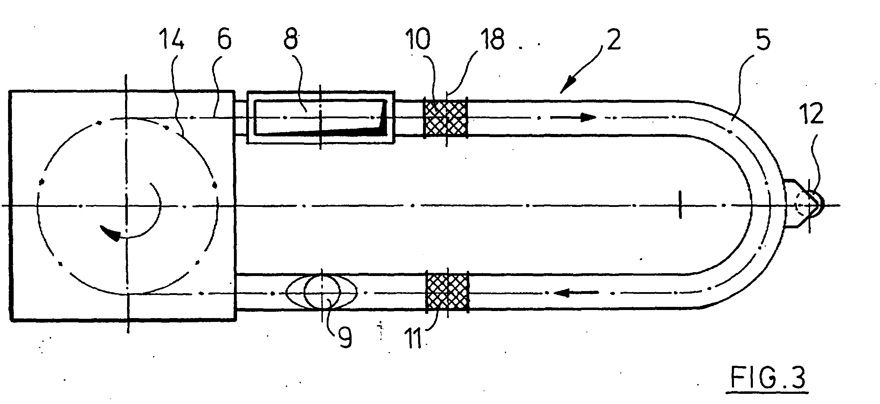

In Fig. 3 ist eine abgewandelte Ausführungsform des Rohrkettenförderers dargestellt, wobei im Unterschied zu der Ausführung in Fig. 1 und 2 die Befüllöffnung 8 gesondert von der Antriebsstation 13 im Rohr 3 angeordnet ist. Hierdurch kann beispielsweise zum Spannen der Förderkette 6 der Antrieb 13 mit dem Kettenrad 14 gegenüber der Rohrschleife 2 verschoben werden.

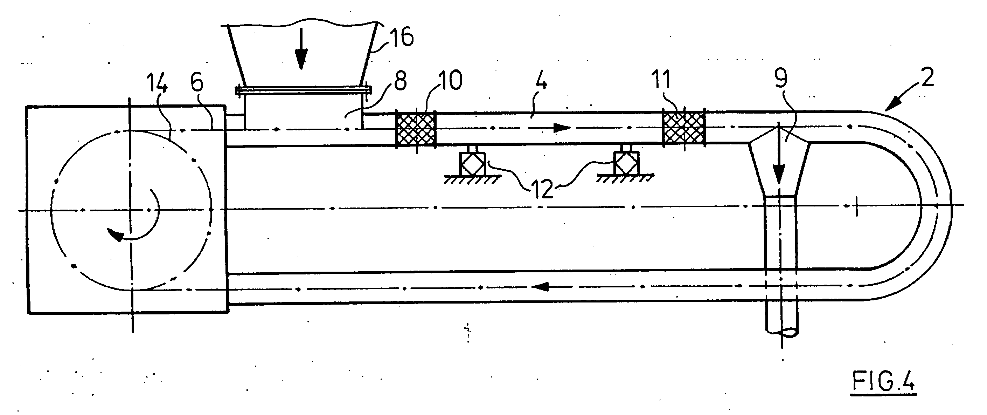

In Fig. 4 ist im Gegensatz zu den bisher beschriebenen liegenden Anordnungen der Rohrschleife 2 eine stehende Anordnung gezeigt, wie sich aus der Anordnung des Zuführtrichters 16 ersehen läßt. Im Gegensatz zu der vorstehend beschriebenen beweglichen Lagerung des Rohrbogens 5 ist hier ein geradliniges Rohrstück 4 als Teil der Rohrschleife 2 mittels flexiblen Zwischenelementen 10 und 11 beweglich gelagert. Das Rohrstück 4 stützt sich hierbei auf zwei Kraftmeßvorrichtungen 12 ab, so daß bei Förderung sich das Rohrstück 4 unter der Last des Fördergutes geringfügig nach unten bewegt und hierbei die beiden Kraftmeßvorrichtungen 12 in Art einer Wägebrücke beaufschlagt. Auch hier kann das Rohrstück 4 durch dünnere Wandstärken so ausgelegt sein, daß es sich unter dem Gewicht des Fördergutes geringfügig nach unten durchbiegt und dabei die Kraftmeßvorrichtung(en) 12 beaufschlagt. Dies gilt insbesondere bei einem langen Rohrstück 4, das mit einem Abstand von mehreren Metern voneinander abgestützt ist und somit an den Endpunkten das flexible Element 10, 11 im Rohr selbst bildet. Nach Passieren des die Meßstrecke bildenden Rohrstückes 4 und des Zwischenelementes 11, das ähnlich dem Rohr 3 im Innendurchmesser möglichst glattflächig ausgebildet ist, gelangt das Fördergut an die Auslaßöffnung 9 und fällt dort aus den zwischen den Mitnehmerscheiben 7 gebildeten Kammern nach unten.

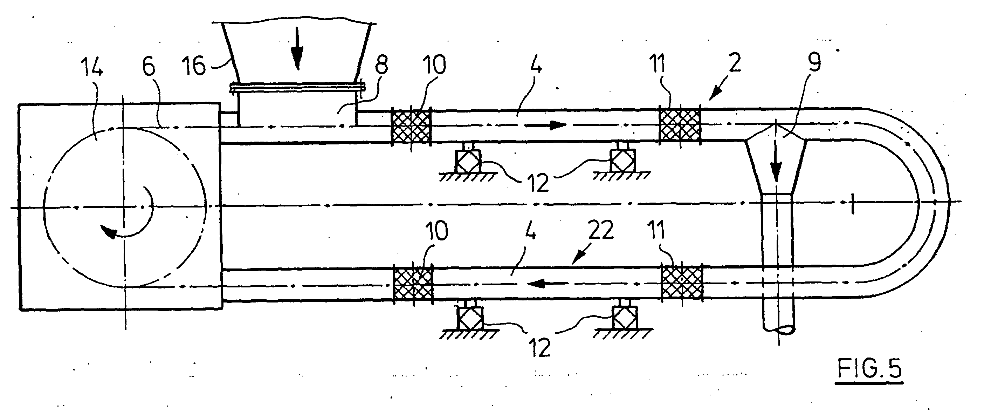

In Fig. 5 ist eine abgewandelte Ausführung zu dem Beispiel der Fig. 4 dargestellt, indem nämlich nach der Auslaßöffnung 9 unterhalb des ersten Rohrstückes 4 ein zweites Rohrstück 4 ebenfalls auf zwei Kraftmeßvorrichtungen 12 abgestützt ist und beweglich an Zwischenelementen 10 und 11 gelagert ist. Hierdurch läßt sich das Totgewicht der Förderkette ausgleichen, so daß durch Vergleich der beiden Meßwerte am oberen Rohrstück 4 und am zweiten Rohrstück 4 exakt die an der Auslaßöffnung 9 austretende Fördergutmenge durch Differenzbildung festgestellt werden kann. Sollten somit an den Mitnehmerscheiben 7 oder der Förderkette 6 Fördergutteilchen haften bleiben, wird somit nur die effektiv die Rohrschleife 2 des Rohrkettenförderers 1 verlassende Schüttgutmenge erfaßt. Durch diese Taramessung ist eine beträchtliche Erhöhung der Meß- und Dosiergenauigkeit möglich. Es sei darauf hingewiesen, daß das Rohrstück 4 als zweites Rohrschleifenteil 22 exakt unterhalb des oberen Rohrstückes 4 angeordnet ist, so daß der Durchhang der Förderkette und damit die Belastung der Kraftmeßvorrichtungen 12 jeweils gleich ist und somit vom Meßergebnis eliminiert werden kann.

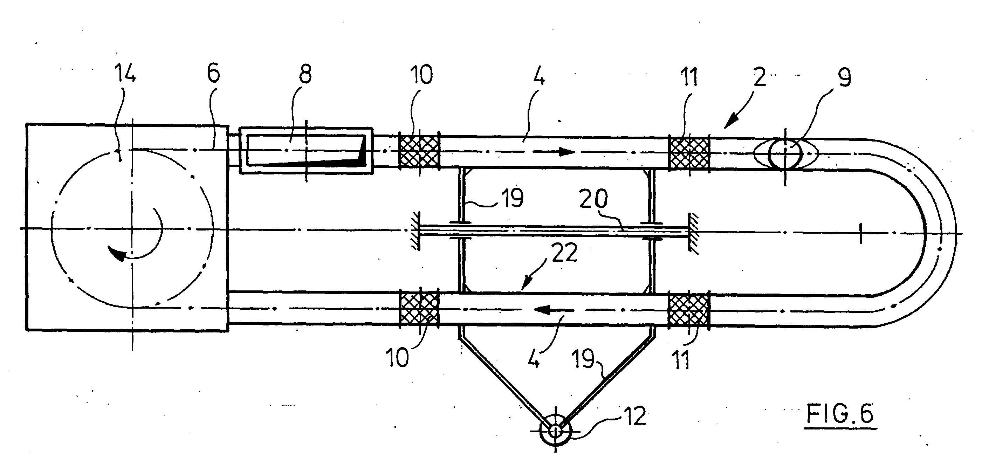

In Fig. 6 ist eine Weiterbildung dieses Meßprinzipes bei liegender Anordnung des Rohrkettenförderes 1 dargestellt. Auch hier sind wiederum gegenüberliegend zwei Rohrstücke 4 vorgesehen, die mit einem Gestänge 19 miteinander verbunden sind. Dieses Gestänge 19 ist auf der Mittelachse der Rohrschleife 2 an einer Pendelachse 20 gelagert, so daß durch diesen doppelarmigen Hebel das Gewicht der Förderketten ausgeglichen wird und somit ebenfalls eine Taramessung oder Rückverwiegung ermöglicht wird. Von besonderem Vorteil ist hierbei, daß durch die Anordnung des Gestänges 19 mit der mittleren Pendelachse 20 nur eine einzige, gemeinsame Kraftmeßvorrichtung 12 benötigt wird. In diesem Falle liegt an dem Rohrstück 4 aufgrund der Beladung mit dem Fördergut ein höheres Gewicht vor als an dem nach der Entladeöffnung 9 angeordneten Rohrstück 4, so daß die Kraftmeßvorrichtung 12 über einen Lenker oder ein Band, hier auf Zug (aus der Zeichenebene heraus) beansprucht wäre.

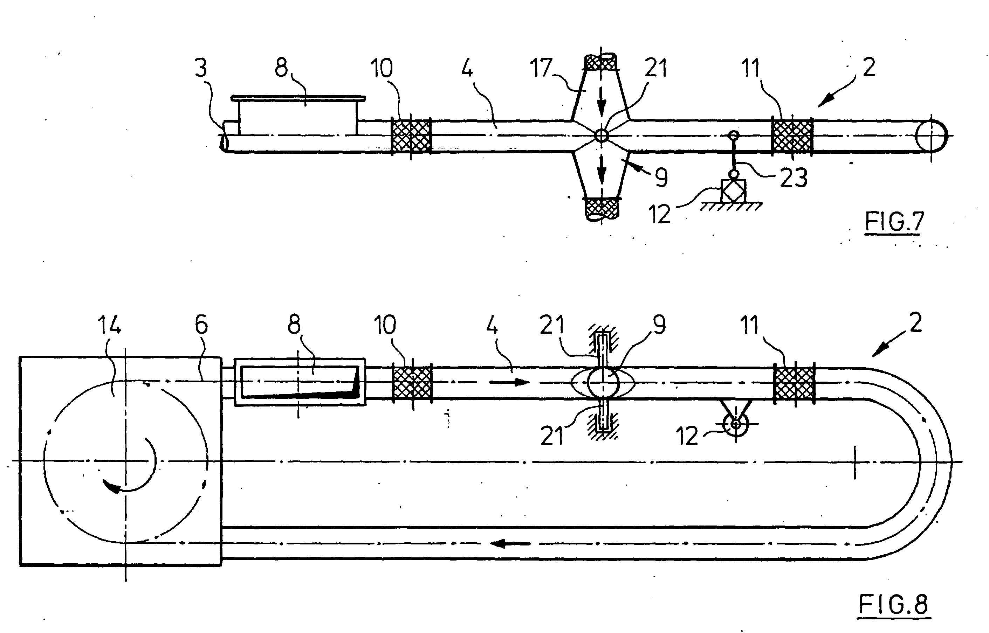

In Fig. 7 und 8 ist in Seiten- und zugehöriger Draufsicht ebenfalls eine liegende Anordnung des Rohrkettenförderers 1 dargestellt, wobei hier das Rohrstück 4 über seitlich davon abstehende Schwenkbolzen 21 gelagert ist. Die Schwenkbolzen 21 sind hierbei etwa in der Mitte des Rohrstückes 4 vorgesehen und verlaufen somit durch die ebenfalls mittig angeordnete Auslaßöffnung 9, die hier mit einer Ausblasleitung 17 ausgestattet ist. Die Kraftmeßvorrichtung 12 ist hierbei über einen Zuganker 23 mit dem Rohrstück 4 verbunden. Somit wirkt das Rohrstück 4 als doppelarmiger Hebel, wobei auf der hier linken Seite der durch die Schwenkbolzen 21 gebildeten Achse ein höheres Gewicht durch die Beladung mit dem Fördergut vorhanden ist, so daß die Kraftmeßzelle über den Zuganker 23 auf Zug belastet ist. Selbstverständlich ist hierbei eine entsprechende spiegelbildliche Anordnung auf Druck ebenfalls möglich. Um eine freie Beweglichkeit des Rohrstückes 4 zu ermöglichen, ist die Ausblasleitung 17 ebenfalls mit elastischen, flexiblen Schläuchen, Gummibälgen oder Kompensatoren angeschlossen. Es sei darauf hingewiesen, daß diese Anordnung auch auf die beweglich gelagerten Rohrbögen 5 entsprechend den Ausführungen in Figuren 1 bis 3 angewendet werden kann.

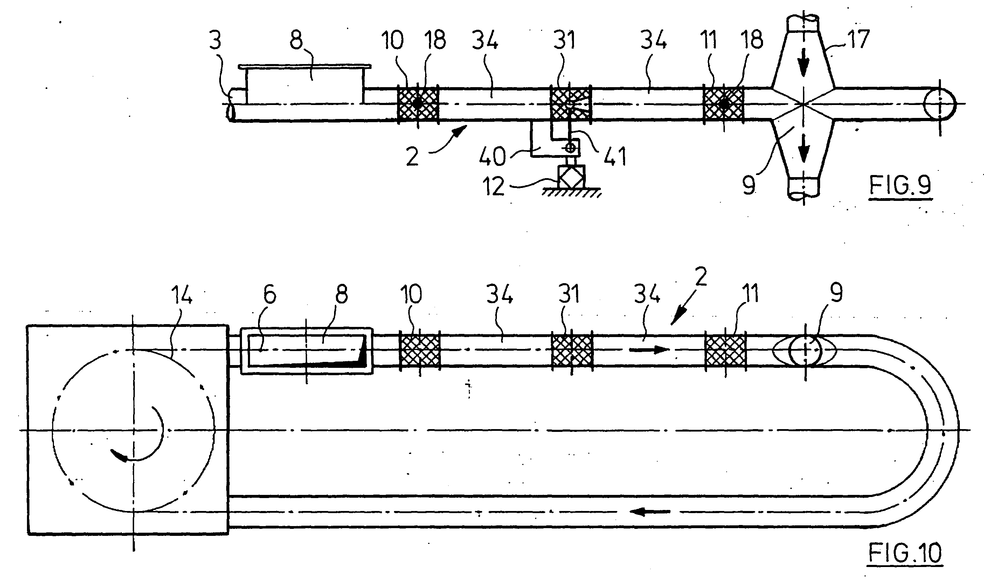

In Fig. 9 und 10 ist in Seiten- und Draufsicht eine liegende Anordnung einer weiteren Ausführungsform des Rohrkettenförderers 1 dargestellt. Hierbei ist der Bereich der Rohrschleife 2 zwischen der Befüllöffnung 8 und der Auslaßöffnung 9 mit zwei unmittelbar hintereinander angeordneten Rohrstücken 34 ausgerüstet, die über drei flexible Zwischenelemente 10, 11 und 31 mit der übrigen Rohrschleife 2 verbunden sind. Unter dem mittleren Zwischenelement 31 ist hierbei die Kraftmeßvorrichtung 12 vorgesehen, die über einen Winkelarm 40 sowohl das linke Rohrstück 34 als auch über einen Druckstab 41 das rechte Rohrstück 34 abstützt. Durch die flexiblen Zwischenelemente ergeben sich somit drei Schwenkachsen 18, so daß sich die Rohrschleife 2 in Seitenansicht gesehen, geringfügig in V-Form durchbiegen kann. Wie oben dargestellt, handelt es sich bei dieser Abknickbewegung nur um einen Knickwinkel von wenigen Winkelminuten oder Winkelsekunden, so daß die Umlaufbewegung der Förderkette 6 nicht behindert wird. Wie am oberen Ende des Druckstabes 41 dargestellt ist, kann im Bereich des Zwischenelementes 31 auch durch Lagerbolzen und Lageraugen ein schwenkbares Zwischenelement anstatt eines Gummibalges oder eines Kompensators vorgesehen sein.

Es sei darauf hingewiesen, daß bei allen Ausführungsbeispielen die Meßwerte der Kraftmeßvorrichtung(-en) 12 einer an sich bekannten Auswerteelektronik, wie in Fig. 1 beispielhaft mit dem Rechner 30 zur Berechnung der Momentan-Förderstärke Q aus Rohrschleifenbelastung q und Fördergeschwindigkeit v dargestellt, zugeführt werden und dort mit eingestellten Sollwerten verglichen werden. Durch Beschleunigung oder Abbremsen des Antriebes 13 des Rohrkettenförderers 1, beispielsweise mit elektronischer Drehzahlregelung (in Fig. 1 Rechner-Ausgang n), kann somit die gewünschte Dosiermenge (Förderstärke) eingehalten werden bzw. eingeregelt werden.

## Patentansprüche

1. Rohrkettenförderer zum Dosieren insbesondere von Schüttgütern mit einem als Rohrschleife (2) angeordneten Rohr, in dem eine Förderkette (6) mit daran befestigten Mitnehmerscheiben (7) umläuft, sowie mit einer Befüllöffnung (8) und einer Auslaßöffnung (9) in dem Rohr,
dadurch gekennzeichnet, daß
wenigstens ein zwischen der Befüll- und Auslaßöffnung (8, 9) angeordnetes Rohrschleifenteil (2) gegenüber dem übrigen Teil der stationär angeordneten Rohrschleife (2) mittels wenigstens zwei flexiblen Zwischenelementen (10, 11) beweglich gelagert ist und auf mindestens einer Kraftmeßvorrichtung (12) abgestützt ist, die mit einem Rechner (30) verbunden ist, in dem aus den Gewichtsmeßwerten der Kraftmeßvorrichtung (12) und Fördergeschwindigkeit, die von einer Geschwindigkeitsmeßvorrichtung (Tachogenerator 13') erfaßt wird, das Produkt zur Erfassung des momentanen Fördergut-Durchflusses gebildet wird.

2. Rohrkettenförderer nach Anspruch 1,
dadurch gekennzeichnet, daß
das Rohrschleifenteil (2) ein Rohrbogen (5) ist und die Kraftmeßvorrichtung (12) auf der Symmetrieachse des Rohrbogens (5) angeordnet ist.

3. Rohrkettenförderer nach Anspruch 1,
dadurch gekennzeichnet, daß
das Rohrschleifenteil (2) ein geradliniges Rohrstück (4) ist.

4. Rohrkettenförderer nach Anspruch 3,
dadurch gekennzeichnet, daß
das Rohrstück (4) auf zwei Kraftmeßvorrichtungen (12) abgestützt ist.

5. Rohrkettenförderer nach einem der Ansprüche 1 bis 4,
dadurch gekennzeichnet, daß
im Verlauf der Rohrschleife (2) nach der Auslaßöffnung (9) ein zweites Rohrschleifenteil (22) auf einer weiteren Kraftmeßvorrichtung (12) abgestützt ist und die Kraftmeßvorrichtungen (12) für die beiden Rohrschleifenteile (2; 22) zur Differenzbildung der Meßwerte miteinander verbunden sind.

6. Rohrkettenförderer nach Anspruch 5,
dadurch gekennzeichnet, daß
das erste Rohrschleifenteil (2) und das zweite Rohrschleifenteil (22) einander gegenüberliegen und mit einem Gestänge (19) miteinander verbunden sind, das an einer zentralen Pendelachse (20) gelagert ist und auf eine einzige, gemeinsame Kraftmeßvorrichtung (12) abgestützt ist.

7. Rohrkettenförderer nach einem der Ansprüche 3 bis 6,
dadurch gekennzeichnet, daß
das Rohrstück (4) bezüglich seiner axialen Länge mittig an seitlichen Schwenkbolzen (21) gelagert ist und auf eine davon beabstandete Kraftmeßvorrichtung (12) abgestützt ist.

8. Rohrkettenförderer nach einem der Ansprüche 3 bis 7,
dadurch gekennzeichnet, daß
unmittelbar hintereinander zwei Rohrstücke (34) unter Lagerung an drei flexiblen Zwischenelementen (10, 11, 31) vorgesehen sind, wobei die Kraftmeßvorrichtung (12) unter dem mittleren Zwischenelement (31) angeordnet ist.

## Claims

1. Tubular chain conveyor for metering in particular bulk materials, with a pipe arranged as a pipe loop (2), in which a conveyor chain (6) with entraining disks (7) fixed thereon circulates, and a filling opening (8) and a discharge opening (9) in the pipe,
characterized in that
at least one pipe loop section (2) between the filling and discharge openings (8, 9) is movably mounted relative to the remaining part of the stationarily arranged pipe loop (2) by means of at least two flexible intermediate elements (10, 11) and is supported on at least one force measuring device (12) which is connected to a computer (30), in which the product is formed from the measured weight values from the force measuring device (12) and a conveyor speed, which is detected by a speed measuring device (tacho-generator 13'), in order to determine the instantaneous throughflow of conveyed material.

2. Tubular chain conveyor according to claim 1, characterized in that the pipe loop section (2) is a pipe bend (5) and the force measuring device (12) is arranged on the axis of symmetry of the pipe bend (5).

3. Tubular chain conveyor according to claim 1, characterized in that the pipe loop section (2) is a straight pipe section (4).

4. Tubular chain conveyor according to claim 3, characterized in that the pipe section (4) is supported on two force measuring devices (12).

5. Tubular chain conveyor according to any of claims 1 to 4, characterized in that a second pipe loop section (22) is supported on a further force measuring device (12) in the run of the pipe loop (2) after the discharge opening (9) and the force measuring devices (12) for the two pipe loop sections (2; 22) are connected together to form the difference between the measured values.

6. Tubular chain conveyor according to claim 5, characterized in that the first pipe loop section (2) and the second pipe loop section (22) are opposite one another and are connected by a link (19) which is mounted on a central pivotal axis (20) and is supported on a single, common force measuring device (12).

7. Tubular chain conveyor according to any of claims 3 to 6, characterized in that the pipe section (4) is mounted centrally relative to its axial length on lateral pivot pins (21) and is supported on a force measuring device (12) spaced therefrom.

8. Tubular chain conveyor according to any of claims 3 to 7, characterized in that two pipe sections (34) are provided directly one after the other, mounted on three flexible intermediate elements (10, 11, 31), the force measuring device (12) being arranged below the central intermediate element (31).

## Revendications

1. Transporteur tubulaire à chaîne, destiné à assurer le dosage en particulier de produits en vrac, avec un tube disposé sous forme de boucle tubulaire (2), dans lequel circule une chaîne de transport (6) équipée de disques d'entraînement (7) fixés sur elle, ainsi qu'avec une ouverture de remplissage (8) et une ouverture d'évacuation (9) ménagées dans la tube, caractérisé en ce qu'au moins une partie de boucle tubulaire (2), disposée entre l'ouverture de remplissage et l'ouverture d'évacuation (8, 9) est montée de façon mobile par rapport au reste de la partie de la boucle tubulaire (2) qui est disposée de façon stationnaire, la mobilité se faisant à l'aide d'au moins deux éléments intermédiaires (10, 11) flexibles, et est soutenue sur au moins un dispositif de mesure de force (12) qui est relié à un ordinateur (30), dans lequel est formé le produit permettant de saisir le flux instantané de produits à transporter, en partant des valeurs de mesure de poids venant du dispositif de mesure de force (12) et de la vitesse de transport, saisie par un dispositif de mesure de vitesse (génératrice tachymètrique 13').

2. Transporteur tubulaire à chaîne selon la revendication 1, caractérisé en ce que la partie de boucle tubulaire (2) ait un coude tubulaire (5) et le dispositif de mesure de force (12) est disposé sur l'axe de symétrie du coude tubulaire (5).

3. Transporteur tubulaire à chaîne selon la revendication 1, caractérisé en ce que la partie de boucle tubulaire (2) ait une pièce tubulaire (4) rectiligne.

4. Transporteur tubulaire à chaîne selon la revendication 3, caractérisé en ce que la pièce tubulaire (4) est soutenue sur deux dispositifs de mesure de force (12).

5. Transporteur tubulaire à chaîne selon l'une quelconque des revendications 1 à 4, caractérisé en ce sur l'étendue de la boucle tubulaire (2) après l'ouverture d'évacuation (9), une deuxième partie de boucle tubulaire (22) est soutenue sur un autre dispositif de mesure de force (12) et les dispositifs de mesure de force (12) destinés aux deux parties de boucle tubulaire (2 ; 22) sont reliés ensemble afin de former la différence entre les valeurs de mesure.

6. Transporteur tubulaire à chaîne selon la revendication 5, caractérisé en ce que la première partie de boucle tubulaire (2) et la deuxième partie de boucle tubulaire (22) sont placées en regard l'une de l'autre et reliées ensemble à l'aide d'une tringlerie (19) montée sur un axe pendulaire (20) central et soutenue sur un dispositif de mesure de force (12) commun, unique.

7. Transporteur tubulaire à chaîne selon l'une des revendications 3 à 6, caractérisé en ce que la pièce tubulaire (4) est montée par rapport à sa longueur axiale au centre sur des boulons de pivotement (21) latéraux et est soutenue sur un dispositif de mesure de force (12) en étant espacé.

8. Transporteur tubulaire à chaîne selon l'une des revendications 3 à 7, caractérisé en ce que deux pièces tubulaires (34) sont prévues directement l'une derrière l'autre en étant montées sur trois éléments intermédiaires (10, 11, 31) flexibles, le dispositif de mesure de force (12) étant disposé sous l'élément intermédiaire (31) médian.
